(19) Europäisches Patentamt
European Patent Office
Office européen des brevets

(11) **EP 1 975 857 A2**

(12) **EUROPÄISCHE PATENTANMELDUNG**

(43) Veröffentlichungstag:
01.10.2008 Patentblatt 2008/40

(51) Int Cl.:
*G06N 3/02* (2006.01)

(21) Anmeldenummer: 08102425.9

(22) Anmeldetag: **10.03.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **27.03.2007 DE 102007014650**

(71) Anmelder: **SIEMENS AKTIENGESELLSCHAFT**
**80333 München (DE)**

(72) Erfinder:
• **Deco, Gustavo**
**08340, Vilassar de Mar (ES)**
• **Stetter, Martin**
**80997, München (DE)**
• **Tambosi, Linda**
**38100 Trento (IT)**

(54) **Verfahren zur rechnergestützten Verarbeitung von in einem Sensornetzwerk erfassten Messwerten**

(57) Die Erfindung betrifft ein Verfahren zur rechnergestützten Verarbeitung von in einem Sensornetzwerk erfassten Messwerten, wobei das Sensornetzwerk eine Vielzahl von Sensorknoten umfasst, welche jeweils einen oder mehrere Sensoren zur Detektion der Messwerte aufweisen, wobei in einem Sensorknoten die Messwerte von einer Anzahl von benachbarten Sensorknoten bekannt sind. Durch das erfindungsgemäße Verfahren wird ein multi-areales neuronales Netzwerk auf ein entsprechendes Sensornetzwerk abgebildet, wodurch die Möglichkeit geschaffen wird, mit Hilfe der Informationen von benachbarten Sensoren auch bei fehlerhaften bzw. ausgefallenen Messungen eines Sensorknotens eine globale Situationserkennung am Ort des Sensorknotens zu gewährleisten. Ein mit einem solchen Verfahren betriebenes Sensornetzwerk ist dabei robuster gegen den Ausfall einiger Sensoren, da ein entsprechender Messwert in geeigneter Weise abgeschätzt werden kann, so dass die nicht vorliegende Messung durch den geschätzten Messwert ersetzt werden kann. Die einzelnen Sensoren der Sensorknoten können somit bei gleicher Robustheit des Sensornetzwerks einfacher aufgebaut sein, da Ausfälle von Sensoren die Funktionstüchtigkeit des Sensornetzwerks weniger beeinflussen.

FIG 1

EP 1 975 857 A2

**Beschreibung**

Die Erfindung betrifft ein Verfahren zur rechnergestützten Verarbeitung von in einem Sensornetzwerk erfassten Messwerten sowie ein entsprechendes Sensornetzwerk und ein entsprechendes Computerprogrammprodukt.

Die Erfindung betrifft allgemein Sensornetzwerke, welche eine Vielzahl von Sensorknoten umfassen, wobei jeder Sensorknoten jeweils einen oder mehrere Sensoren zur Detektion von beliebigen Messwerten aufweist. Die einzelnen Sensorknoten sind hierbei über entsprechende Kommunikationsverbindungen, beispielsweise über Funk oder drahtgebunden, zumindest teilweise miteinander vernetzt. Insbesondere kann ein jeweiliger Sensorknoten mit einer bestimmten Anzahl von benachbarten Sensorknoten derart kommunizieren, dass zwischen den Sensorknoten die jeweiligen ermittelten Messwerte ausgetauscht werden können. Die erfassten Messwerte können beliebige Messgrößen sein, beispielsweise ein Temperaturwert an dem Ort, an dem der Sensorknoten platziert ist, oder andere physikalische Größen, wie z.B. Luftfeuchtigkeit, Lichteinstrahlung, Rauchentwicklung und dergleichen.

Bei Sensornetzwerken kann es zu Ausfällen von Sensorknoten kommen, welche die Funktionstüchtigkeit des Netzwerks stark beeinträchtigten. Bei Ausfall eines Sensorknotens ist es zur korrekten Funktionsweise des Netzwerks deshalb erforderlich, dass der entsprechende Sensorknoten repariert wird bzw. durch einen neuen funktionstüchtigen Sensorknoten ersetzt wird. Dies nimmt jedoch häufig einen längeren Zeitraum in Anspruch, so dass das Sensornetzwerk in diesem Zeitraum nur eingeschränkt funktionsfähig ist. Es ist deshalb wünschenswert, dass in einem Sensornetzwerk auch bei Ausfall eines Sensorknotens die im Wesentlichen vollständige Funktionsfähigkeit des Netzwerks gewährleistet ist.

Darüber hinaus messen bekannte Sensornetzwerke immer nur lokale Messwerte, ohne dass hierbei die Informationen von benachbarten Sensorknoten bei der Auswertung eines Messwerts berücksichtigt werden, obwohl diese Informationen den Sensorknoten zur Verfügung stehen. Es können somit nicht Unregelmä-ßigkeiten in den Messungen durch globale Auswertung von lokalen Messwerten erfasst werden.

Die Druckschrift US 2005/0251291 A1 beschreibt ein System von selbstorganisierenden mobilen Roboter-Agenten, wobei das System verschiedene Technologien der künstlichen Intelligenz, umfassend künstliche neuronale Netze, verwendet.

Die Druckschrift Albrecht Schmidt: "A Modular Neural Network Architecture with Additional Generalization Abilities for High Dimensional Input Vectors", Pgs. I-x & 1-113, Manchester Metropolitan University, Sept. 1996, eHB, beschreibt verschiedene neuronale Netzwerkarchitekturen und diskutiert insbesondere modulare künstliche neuronale Netze.

Der Seminarvortrag: "Neuronale Netze in der Robotik", S. 1-20, TU-Clausthal, 19.01.2002, http://www2.in.tu-clausthal.de/~reuter/ausarbeitung/Elke_von_Lienen_-_Neuronale_Netze_in_der_Robotik.pdf; eHB, beschreibt allgemein die Verwendung von neuronalen Netzen in der Robotik.

Aufgabe der Erfindung ist es deshalb, ein Verfahren zur rechnergestützten Verarbeitung von in einem Sensornetzwerk erfassten Messwerten zu schaffen, mit dem aus lokalen und zum Teil unvollständigen Messungen eine globale Situation im Sensornetzwerk erfasst werden kann.

Diese Aufgabe wird durch die unabhängigen Patentansprüche gelöst. Weiterbildungen der Erfindung sind in den abhängigen Ansprüchen definiert.

In dem erfindungsgemäßen Verfahren wird jedem Sensorknoten ein Neuronenareal umfassend eine Mehrzahl von durch Aktivitäten gekennzeichneten Neuronengruppen mit einem oder mehreren Neuronen zugewiesen, wobei jeder Neuronengruppe ein Messwert und/oder Messwertbereich der im Sensorknoten messbaren Messwerte zugeordnet ist. Die einzelnen Neuronengruppen von benachbarten Sensorknoten sind hierbei miteinander vernetzt, wobei Korrelationen zwischen den Messwerten eines jeweiligen Sensorknotens zu den Messwerten der benachbarten Sensorknoten durch Gewichte repräsentiert sind, welche mit einem Lernverfahren gelernt sind und jeweils zwischen einer Neuronengruppe des jeweiligen Sensorknotens und einer Neuronengruppe eines benachbarten Sensorknotens liegen. Als Lernverfahren wird hierbei insbesondere ein Lernverfahren verwendet, welches bei Vorliegen von Korrelationen zwischen Neuronengruppen, d.h. bei Vorliegen von gleichzeitiger Aktivität von verschiedenen Neuronengruppen, das entsprechende Gewicht zwischen den Neuronengruppen verstärkt. In einer bevorzugten Ausgestaltung wird hierbei ein Hebb'sches Lernverfahren verwendet.

Hebb'sche Lernverfahren sind dabei hinlänglich aus dem Stand der Technik bekannt (siehe beispielsweise Druckschrift [1]).

In dem erfindungsgemäßen Verfahren wird an die Neuronengruppen eines jeweiligen Sensorknotens jeweils ein Eingabesignal angelegt, wobei das Eingabesignal ein erstes Signal umfasst, welches von den Gewichten zwischen der jeweiligen Neuronengruppe und den Neuronengruppen der benachbarten Sensorknoten sowie von den Aktivitäten der Neuronengruppen der benachbarten Sensorknoten abhängt. Ferner wird im Falle, dass ein Messwert in einem jeweiligen Sensorknoten zu einem Messzeitpunkt messbar ist, der Neuronengruppe, welcher der gemessene Messwert oder der entsprechende Messwertbereich zugeordnet ist, ferner ein zweites Signal zugeführt. Dieses zweite Signal zeigt somit an, dass der Sensorknoten eine Messung durchgeführt hat. Durch Zuführung des Signals zu der entsprechenden Neuronengruppe, die dem gemessenen Wert entspricht bzw. welcher der Messwertbereich zugeordnet ist, in dem der gemessene Wert liegt, wird die Aktivität dieser Neuronengruppe verstärkt. Dabei ist die Aktivität in die Zustände aktiv und inaktiv kategorisiert, wobei das zweite Signal derart groß ist, dass es die Neuronengruppe, an der das zweite Signal angelegt ist, in den aktiven Zustand versetzt.

Erfindungsgemäß werden in einem Neuronenareal somit nicht nur lokale Messwerte berücksichtigt, sondern es fließen auch die Messwerte von benachbarten Sensorknoten über die Aktivitäten der Neuronengruppen dieser Sensorknoten sowie über die entsprechend gelernten Gewichte ein. Über die Aktivitäten der Neuronengruppen des jeweiligen Sensorknotens und/oder der benachbarten Sensorknoten werden dann eine Abweichung vom Normalbetrieb des jeweiligen Sensorknotens und/oder eine Abweichung vom Normalzustand der Umgebung des jeweiligen Sensorknotens und/oder eine Schätzung des Messwerts des jeweiligen Sensorknotens ermittelt.

Durch das erfindungsgemäße Verfahren wird ein multi-areales neuronales Netzwerk auf ein Sensornetzwerk abgebildet, wodurch die Möglichkeit geschaffen wird, mit Hilfe der Informationen von benachbarten Sensorknoten auch bei fehlerhaften bzw. ausgefallenen Messungen eines Sensorknotens eine globale Situationserkennung am Ort des Sensorknotens zu gewährleisten. Ein mit einem solchen Verfahren betriebenes Sensornetzwerk ist dabei robuster gegen den Ausfall von Sensoren, da ein entsprechender Messwert in geeigneter Weise abgeschätzt werden kann, so dass die nicht vorliegende Messung durch den geschätzten Messwert ersetzt werden kann. Die einzelnen Sensoren der Sensorknoten können somit bei gleicher Robustheit des Sensornetzwerks einfacher aufgebaut sein, da Ausfälle von Sensoren die Funktionstüchtigkeit des Sensornetzwerks weniger beeinflussen.

In einer Ausgestaltung des erfindungsgemäßen Verfahrens werden die Gewichte zwischen den Neuronengruppen der Sensorknoten kontinuierlich während der Durchführung des Verfahrens gelernt. Alternativ ist es auch möglich, dass die Gewichte vorab gelernt werden und während der Durchführung des Verfahrens konstant gehalten werden.

Mit dem erfindungsgemäßen Verfahren kann über die Abbildung des Sensornetzwerks auf ein neuronales Netz beispielsweise der Ausfall eines Sensorknotens detektiert werden. Dies erfolgt dadurch, dass ein Ausfall dann festgestellt wird, wenn keine der Neuronengruppen des entsprechenden Sensorknotens aktiv ist, was damit gleichzusetzen ist, dass keine Messwerte von dem jeweiligen Sensorknoten ermittelt werden. Hieraus lässt sich schließen, dass der Sensorknoten nicht richtig funktioniert bzw. ausgefallen ist.

In einer besonders bevorzugten Ausführungsform des erfindungsgemäßen Verfahrens wird dem Neuronenareal eines jeweiligen Sensorknotens ein einstellbares globales Hintergrundsignal zugeführt. Durch die Veränderung eines solchen Hintergrundsignals können die Eigenschaften der Neuronenareale geeignet beeinflusst werden. Ein neuronales Netz mit veränderbarem Hintergrundsignal ist beispielsweise in der Druckschrift [2] sowie in der Patentanmeldung DE 10 2005 045 120.9 beschrieben.

Das globale Hintergrundsignal wird in einer Ausführungsform des erfindungsgemäßen Verfahrens während des Betriebs des Sensornetzwerks, insbesondere nach der Detektion des Ausfalls eines Sensorknotens, derart justiert, dass genau eine Neuronengruppe im aktiven Zustand ist. Nach dieser Justierung stellen dann die der aktiven Neuronengruppe zugeordneten Messwerte bzw. Messwertbereiche jeweils die Schätzung des Messwerts dar. Auf diese Weise wird durch entsprechende Einstellung des Hintergrundsignals auch bei Ausfall eines Sensorknotens eine Ermittlung eines entsprechenden geschätzten Messwerts erreicht, wobei der geschätzte Messwert über die Eingaben der benachbarten Sensorknoten (d.h. über das erste Signal) beeinflusst wird. Man macht sich in dieser Ausführungsform somit die gewichteten Korrelationen von benachbarten Sensorknoten dahingehend zunutze, dass hierdurch Messwerte geeignet abgeschätzt werden können.

Das erfindungsgemäße Verfahren kann neben dem Ausfall eines Sensorknotens auch im Normalbetrieb zur Schätzung eines Messwerts genutzt werden. Dabei wird in einem jeweiligen Sensorknoten an die Neuronengruppen des jeweiligen Sensorknotens jeweils ausschließlich das erste Signal als Eingabesignal angelegt, wobei der Messwert und/oder Messwertbereich derjenigen Neuronengruppe, welche aufgrund des Anlegens des ersten Signals aktiv ist, die Schätzung des Messwerts darstellt. Diese Variante der Erfindung erfordert die Justierung des globalen Hintergrundsignals derart, dass genau eine Neuronengruppe des jeweiligen Sensorknotens aktiv ist.

Der Messwert kann gegebenenfalls auch auf andere Weise ohne Variation des Hintergrundsignals abgeschätzt werden. In einer Variante wird der Messwert bzw. Messwertbereich derjenigen Neuronengruppe, welche das größte erste Signal erhält, als geschätzter Messwert verwendet. Ebenso kann der Schwerpunkt der Verteilung der ersten Signale über die Neuronengruppen des jeweiligen Sensorknotens ermittelt werden, wobei der Messwert bzw. Messwertbereich der Neuronengruppe, bei der der Schwerpunkt liegt, die Schätzung des Messwerts darstellt.

Eine weitere Variante der Schätzung des Messwerts besteht darin, dass die Verteilung der ersten Signale über die Neuronengruppen des jeweiligen Sensorknotens auf eine Wahrscheinlichkeitsverteilung normiert wird und durch Stichprobenentnahme mit dieser Wahrscheinlichkeitsverteilung die Schätzung des Messwerts bestimmt wird. Diese Variante berücksichtigt auch auftretende ungenaue Messungen bzw. Messfehler von benachbarten Sensorknoten über die generierte Wahrscheinlichkeitsverteilung.

In einer Variante der Erfindung, bei welcher die Verteilung der ersten Signale über die Neuronengruppe des jeweiligen Sensorknotens auf eine Wahrscheinlichkeitsverteilung normiert wird, wird die Höhe der Wahrscheinlichkeit an der Stelle des tatsächlichen Messwerts des jeweiligen Sensorknotens (d.h. an der Stelle der Neuronengruppe, welcher der tatsächliche Messwert zugeordnet ist) als Kriterium für die Abweichung vom Normalzustand der Umgebung des Sensorknotens verwendet. Vorzugsweise ist dieses Kriterium dabei der Kehrwert der Höhe der Wahrscheinlichkeit an der Stelle des tatsächlichen Messwerts.

Mit den oben beschriebenen Varianten kann auf einfache Weise eine Abweichung vom Normalbetriebszustand des jeweiligen Sensorknotens bzw. vom Normalzustand der gemessenen Umgebungsgrößen festgestellt werden. Eine solche Abweichung wird insbesondere dann festgestellt, wenn die Schätzung des Messwerts mehr als ein vorbestimmter Schwellenwert von dem tatsächlich ermittelten Messwert des jeweiligen Sensorknotens abweicht.

Als Sensoren können in dem Sensornetzwerk beliebige Sensoren eingesetzt werden, beispielsweise Temperatursensoren und/oder Helligkeitssensoren und/oder Luftfeuchtigkeitssensoren und dergleichen.

Das erfindungsgemäße Verfahren kann in beliebigen Sensornetzen in beliebigen technischen Gebieten verwendet werden, beispielsweise bei Sensornetzwerken in Gebäuden zur Brandüberwachung oder zur Überwachung von Hochspannungsleitungen bzw. zur Überwachung von Transport- oder Logistiksystemen. Ein weiterer Anwendungsbereich ist beispielsweise die Lagerungsüberwachung von Lebensmitteln oder Medikamenten, bei denen die Temperatur bzw. die Feuchtigkeit der Lebensmittel bzw. Medikamente gemessen wird. Ein weiterer Anwendungsfall ist der Einsatz des Verfahrens in Produktionsanlagen, bei denen mit dem Sensornetzwerk der Betrieb einer Fertigungsstraße überwacht wird.

Neben dem oben beschriebenen Verfahren betrifft die Erfindung ferner ein Sensornetzwerk, welches derart ausgestaltet ist, dass in dem Sensornetzwerk das erfindungsgemäße Verfahren durchgeführt werden kann. Darüber hinaus umfasst die Erfindung ein Computerprogrammprodukt mit einem auf einem maschinenlesbaren Träger gespeicherten Programmcode zur Durchführung des erfindungsgemäßen Verfahrens, wenn das Programm auf einem Rechner, insbesondere in einem Sensorknoten, abläuft.

Ausführungsbeispiele der Erfindung werden nachfolgend anhand der beigefügten Figuren detailliert beschrieben.

Es zeigen:

Fig. 1    eine schematische Darstellung eines Teils eines Sensornetzwerks mit untereinander kommunizierenden Sensorknoten;

Fig. 2    eine schematische Darstellung, welche das Lernen der Gewichte zwischen den Sensorknoten gemäß einer Variante des erfindungsgemäßen Verfahrens verdeutlicht; und

Fig. 3    eine schematische Darstellung einer Ausführungsform eines in den Sensorknoten des Sensornetzwerks eingesetzten Neuronenareals.

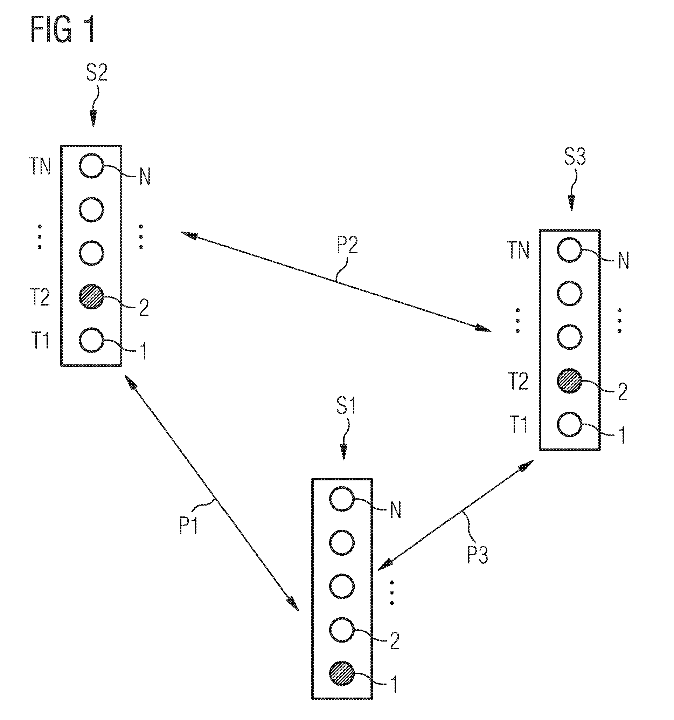

Fig. 1 zeigt eine schematische Darstellung eines Ausschnitts aus einem Sensornetzwerk, in dem das erfindungsgemäße Verfahren eingesetzt wird. Der gezeigte Ausschnitt umfasst drei Sensorknoten S1, S2 und S3, welche gegenseitig untereinander kommunizieren können, wie durch die Doppelpfeile P1, P2 und P3 angedeutet ist. Das Sensornetzwerk beinhaltet hierbei weitere Sensorknoten, welche nicht in Fig. 1 wiedergegeben sind. In der hier beschriebenen Ausgestaltung umfasst jeder Sensorknoten einen Temperatursensor, der Temperaturen T1, T2, ... bis TN messen kann.

Gemäß dem Verfahren der Erfindung wird in jedem der Sensorknoten S1, S2 und S3 ein Neuronenareal ausgebildet, das ein abstrahiertes Hirnareal darstellt, welches in einem spärlichen topographischen Kode die momentan gemessene Temperatur des Sensorknotens repräsentiert. Dies bedeutet mit anderen Worten, dass jedem Sensorknoten ein Neuronenareal mit einer Mehrzahl von Neuronenpools bzw. Neuronengruppen 1, 2, ..., N zugeordnet ist, wobei jede Neuronengruppe eine entsprechende Temperatur T1, T2, ..., TN repräsentiert. Die Temperatur muss hierbei kein fester Temperaturwert sein, sondern sie kann auch eine bestimmte Spanne von Temperaturwerten repräsentieren.

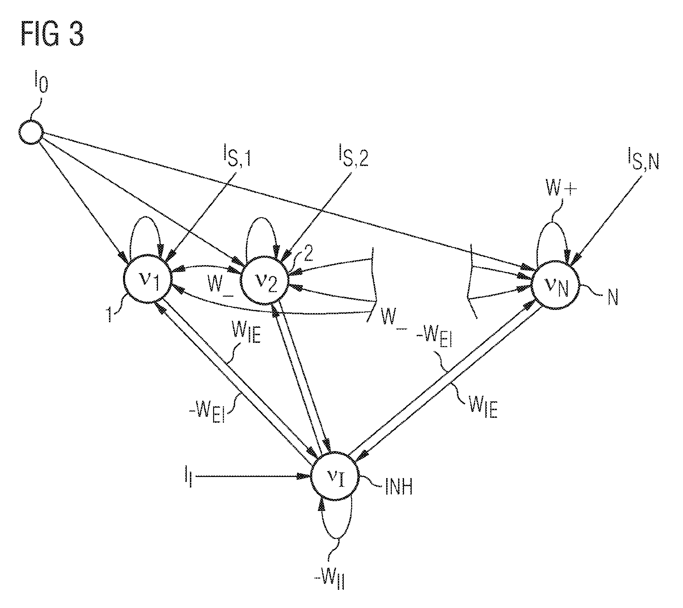

Jeder der Neuronenpools 1 bis N empfängt entsprechende Eingabesignale $I_{s,1}$ bis $I_{s,N}$ (siehe Fig. 3), mit denen die Pools aktiviert werden können. In dem Beispiel der Fig. 1 sind die aktivierten Neuronenpools durch Schraffierungen angedeutet. Insbesondere ist in dem Sensorknoten S2 und S3 der Pool 2 aktiv, wohingegen in dem Sensorknoten S1 der Pool 1 aktiv ist. In der hier beschriebenen Ausführungsform werden die Aktivitäten der einzelnen Pools binär codiert, d.h. ein Pool ist bei Überschreiten einer bestimmten Aktivität in einem aktiven Zustand und ansonsten in einem inaktiven Zustand. Bei einem funktionierenden Sensorknoten wird hierbei bei der Messung eines entsprechenden Temperaturwerts ein entsprechendes Signal demjenigen Neuronenpool zugeführt, der den gemessenen Temperaturwert repräsentiert. Dieses Signal wird nachfolgend als Sensorsignal bezeichnet und entspricht dem zweiten Signal im Sinne der Ansprüche.

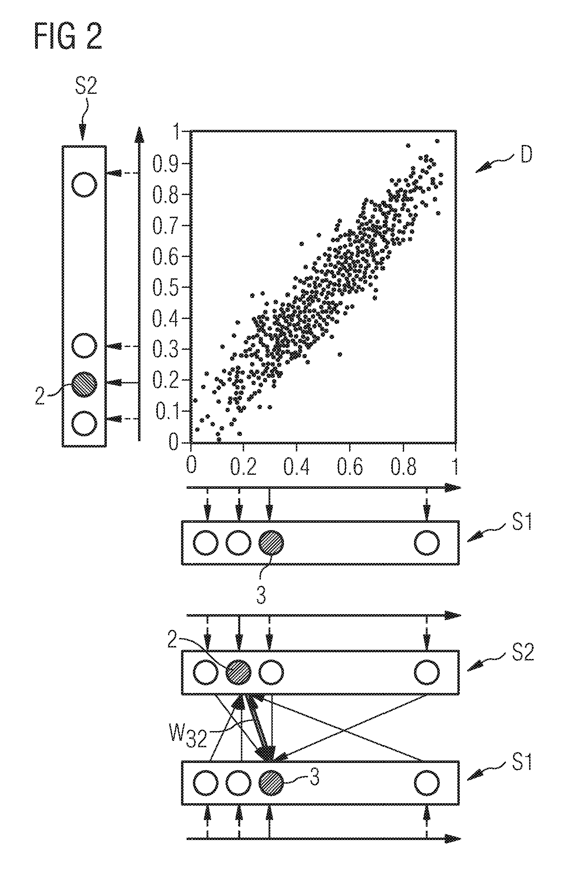

Darüber hinaus empfangen alle Pools Signale von ihren benachbarten Sensorknoten, wobei die Signale eine gewichtete Summe der Aktivitäten der anderen Pools sind. Im Folgenden werden die Signale der benachbarten Sensorknoten, welche in einem jeweiligen Sensorknoten empfangen werden, auch als laterale Eingabe bezeichnet. Im Beispiel der Fig. 1 empfängt somit beispielsweise der Sensorknoten S2 ein Eingangssignal mit entsprechenden Gewichten vom aktiven Pool 2 des Sensorknotens S3 sowie zusätzlich ein Eingabesignal mit entsprechenden Gewichten vom aktiven Pool 1 des Sensorknotens S1. Ferner empfängt der Neuronenpool 2 des Sensorknotens S2 als einziger Pool dieses Sensorknotens das Sensorsignal, denn in dem Knoten S2 wird die Temperatur T2 gemessen. Die im Vorangegangenen genannten Gewichte werden hierbei derart gelernt, dass Korrelationen zwischen den gemessenen Temperaturen der einzelnen Sensoren geeignet berücksichtigt werden, wie nachfolgend anhand von Fig. 2 beschrieben wird.

Fig. 2 verdeutlicht das in der hier beschriebenen Ausführungsform verwendete Hebb'sche Lernverfahren, welches dem in der Druckschrift [1] beschriebenen Lernverfahren entspricht. Beim Hebb'schen Lernverfahren werden Gewichte zwischen solchen Neuronenpools von unterschiedlichen Sensorknoten verstärkt, welche gleichzeitig aktiv sind. In Fig. 2 ist in dem dargestellten Diagramm D beispielhaft ein Datensatz einer Vielzahl von Messwerten von den Sensorknoten S1 und S2 der Fig. 1 wiedergegeben. Die Werte der einzelnen Messungen sind hierbei auf eine Skala zwischen 0 auf 1 abgebildet, wobei entlang der Abszisse die Messwerte des Sensorknotens S1 und entlang der Ordinate die Messwerte des Sensorknotens S2 wiedergegeben sind. Die beiden Messwerte sind über eine positiv korrelierte Gaußverteilung miteinander verknüpft, wobei der Mittelwert der Gaußverteilung im Wesentlichen entlang der Diagonalen im Koordinatensystem des Diagramms D liegt. Mit Hilfe eines solchen Datensatzes werden nunmehr die Gewichte gelernt, wobei in Fig. 2 beispielhaft ein Messpunkt betrachtet wird, bei dem der Neuronenpool 3 des Sensorknotens S1 aktiv ist und der Neuronenpool 2 des Sensorknotens S2 aktiv ist. Aufgrund dieser gleichzeitigen Aktivität der beiden Neuronenpools wird dann durch das Hebb'sche Lernen das entsprechende Gewicht zwischen dem Neuronenpool 3 von S1 und dem Neuronenpool 2 von S2 verstärkt. Dies ist durch die fettgedruckten Pfeile im unteren Teil der Fig. 2 angedeutet. Das Gewicht wird hierbei als entsprechender Matrixeintrag $W_{32}$ in der Hebb'schen Matrix repräsentiert, wobei die Hebb'sche Matrix alle möglichen Gewichte zwischen den Neuronenpools der Sensorknoten S1 und S2 enthält. Darüber hinaus sind weitere Korrelationen zwischen Neuronenpools durch zusätzliche Linien zwischen S1 und S2 im unteren Teil der Fig. 2 angedeutet.

Durch das Hebb'sche Lernen wird somit die Hebb'sche Matrix mit entsprechenden Gewichten $W_{ij}$ ($i, j = 1, ..., N$) zwischen den einzelnen Neuronenpools aufgebaut. Durch die Gewichte wird hierbei die entsprechende laterale Eingabe in einem Neuronenpool eines Sensorknotens festgelegt.

Mathematisch lässt sich das Eingabesignal für einen beliebigen Neuronenpool i eines Sensorknotens wie folgt schreiben.

$$I_{S,i} = I + \sum_{j} W_{ij} v_{j} \qquad (1)$$

Hierbei ist I das Sensorsignal, welches in dem entsprechenden Pool i nur dann eingegeben wird, wenn tatsächlich ein entsprechender, durch den Neuronenpool repräsentierter Messwert vorliegt. Die Summe der Gleichung (1) geht hierbei über alle Neuronenpools von benachbarten Sensorknoten, d.h. von Sensorknoten, welche mit dem betrachteten Sensorknoten kommunizieren. $v_{j}$ ist hierbei die Aktivität des entsprechenden Neuronenpools j eines benachbarten Sensorknotens, wobei zu berücksichtigen ist, dass die Aktivitäten binär codiert sind, d.h. $v_{j} = 1$, wenn Pool j aktiv ist und ansonsten 0.

In einem funktionstüchtigen Sensorknoten wird das Sensorsignal I hierbei derart gewählt, dass das Sensorsignal alleine zu einer Aktivierung des entsprechenden Pools führt, wohingegen der Wert der Summe in Gleichung (1) wesentlich kleiner ist und alleine nicht zur Aktivierung eines Pools ausreicht. Auf diese Weise können Ausfälle eines Sensorknotens immer dann festgestellt werden, wenn detektiert wird, dass keiner der Neuronenpools in dem Neuronenareal des entsprechenden Sensorknotens eine Aktivität aufweist. In diesem Fall wird nämlich durch den Sensorknoten keine Temperatur gemessen, was darauf schließen lässt, dass der Sensorknoten ausgefallen ist.

In einer bevorzugten Variante des oben beschriebenen Hebb'schen Lernens wird ein entsprechendes Gewicht $W_{mn}$ zwischen zwei Neuronenpools m und n von unterschiedlichen benachbarten Sensorknoten dann verstärkt, wenn die Aktivitäten $v_{m}$ bzw. $v_{n}$ eine bestimmte Schwelle überschreiten, und ansonsten wird die Aktivität nicht verändert. Die Aktivität wird hierbei um den Wert $\Delta W_{mn}$ wie folgt erhöht:

$$\Delta W_{mn} = \begin{cases} q_+ \dfrac{W_+ - W_{mn}(t)}{2W_+}, & \text{falls} \quad v_n, v_m > \text{Schwellenwert (z.B. 0,5)} \\ 0 & \text{sonst} \end{cases} \qquad (2)$$

Hierbei bezeichnet der Term $q_+$ die Schrittweite, welche beim Hebb'schen Lernen verwendet wird. $q_+$ ist üblicherweise viel kleiner als 1, beispielsweise 0,01. Darüber hinaus wird durch den Wert $W_+$ ein Maximalwert für ein Gewicht und durch den Wert $W_-$ ein Minimalwert für ein Gewicht festgelegt, wobei der Minimalwert $W_-$ der negative Wert von $W_+$ ist, d.h. $W_- = -W_+$.

Hieraus ergibt sich ausgehend von dem Gewicht $W_{mn}(t)$ zum aktuellen Zeitpunkt t als neues Gewicht $W_{mn}(t+1)$ zum nächsten Zeitpunkt (t+1) folgender Wert:

$$W_{mn}(t+1) = W_{mn}(t) + \Delta W_{mn} - \frac{1}{N} \sum_{l=1}^{N} \Delta W_{ml} \qquad (3)$$

In dem Summanden am Ende der Gleichung (3) wird über die Änderungen aller mit dem Neuronenpool m verknüpften Gewichte summiert, und es wird hierdurch eine Normalisierung derart erreicht, dass im Durchschnitt eine konstante Eingabe in der Form eines Hintergrundsignals für jeden Pool erreicht wird.

Das oben beschriebene Lernverfahren ist nur ein Beispiel eines Hebb'schen Lernverfahrens und es können auch beliebige andere Variante von Hebb'schen Lernverfahren verwendet werden. Entscheidend ist lediglich, dass das Lernverfahren derart ausgestaltet ist, dass Gewichte zwischen Neuronenpools von unterschiedlichen Sensorknoten, welche gleichzeitig aktiv sind, verstärkt werden. Dies kann gegebenenfalls auch durch andere Lernverfahren als Hebb'sche Lernverfahren erreicht werden.

In der hier beschriebenen Ausführungsform der Erfindung wird für jeden Sensorknoten des Sensornetzwerks ein Neuronenareal mit einstellbarem Hintergrundstrom bzw. Hintergrundsignal ausgebildet. Ein solches Neuronenareal wird beispielsweise in der Druckschrift [2] beschrieben. Durch das einstellbare Hintergrundsignal können hierbei die Eigenschaften der einzelnen Neuronenareale verändert werden, was dazu verwendet werden kann, um entsprechende Auswertungen der miteinander korrelierten Messwerte von benachbarten Sensorknoten vorzunehmen. In einer Variante des erfindungsgemäßen Verfahrens wird beispielsweise bei Ausfall eines Sensorknotens das Hintergrundsignal so lange erhöht, bis sich ein Neuronenareal mit einem einzigen aktiven Neuronenpool ausbildet. Der Messwert bzw. der Messwertbereich desjenigen Neuronenpools, der nach der Justierung des Hintergrundsignals aktiv ist, wird dann als geschätzter Messwert verwendet. Der Betrieb des Sensornetzwerks kann somit fortgesetzt werden, wobei nunmehr der tatsächliche Messwert durch den geschätzten Messwert ersetzt wird. Die Erfinder konnten durch Simulationen nachweisen, dass ein derartiger geschätzter Messwert sehr gut mit dem beim ordnungsgemäßen Betrieb des Sensorknotens gemessenen tatsächlichen Messwert übereinstimmt.

Die soeben dargelegte Schätzung eines Messwerts kann ferner auch bei einem funktionierenden Sensorknoten dazu verwendet werden, um Anomalitäten zu detektieren. Solche Anomalitäten können bei Temperatursensoren beispielsweise daraus resultieren, dass an der Stelle, an welcher der Temperatursensor aufgestellt ist, Feuer ausbricht, was zunächst zu einer nur lokal auf dem Sensorknoten begrenzten Erhöhung der Temperatur führt, wohingegen die anderen benachbarten Sensorknoten weiterhin die momentan vorliegende Normaltemperatur anzeigen. Diese Anomalität kann dadurch festgestellt werden, dass kontinuierlich gemäß der oben dargelegten Schätzung ein geschätzter Messwert ermittelt wird und mit dem tatsächlich gemessenen Messwert verglichen wird. Sollte die Abweichung ein bestimmtes Maß überschreiten, wird ein entsprechender Alarm ausgegeben.

Die oben beschriebene Schätzung setzt voraus, dass ohne anliegendes Sensorsignal in einem Neuronenareal der Hintergrundstrom so lange erhöht wird, bis genau ein Neuronenpool aktiv ist. Dies wird durch die entsprechende Lösung der dem Neuronenareal zugrunde liegenden Differentialgleichungen erreicht. Es besteht jedoch auch die Möglichkeit, Anomalitäten ohne die Lösung der Differentialgleichungen zu ermitteln. Insbesondere kann die Schätzung des Messwerts auch ohne Veränderung des Hintergrundsignals dadurch erfolgen, dass in einem Sensorknoten derjenige Neuronenpool bestimmt wird, der die größte laterale Eingabe erhält. Der Messwert bzw. Messwertbereich, der diesem Neuronenpool zugeordnet ist, wird dann als geschätzter Messwert verwendet. Ebenso kann der Schwerpunkt der Verteilung der lateralen Eingaben über die Neuronenpools ermittelt werden, wobei der Messwert desjenigen Neuronenpools, an dem der Schwerpunkt liegt, als der geschätzte Messwert verwendet wird. Darüber hinaus ist es möglich, dass die Verteilung der lateralen Eingaben über die Neuronenpools als Wahrscheinlichkeitsverteilung aufgefasst wird, wobei durch Stichprobenentnahme auf der Basis dieser Wahrscheinlichkeitsverteilung der geschätzte Messwert bestimmt wird. Auf diese Weise können Ungenauigkeiten bzw. Fehler in den Messungen von benachbarten Sensorknoten bei der Schätzung des Messwerts berücksichtigt werden.

Wie im Vorangegangenen dargelegt, wird in der hier beschriebenen Ausführungsform des erfindungsgemäßen Verfahrens jeder Sensorknoten durch ein Neuronenareal modelliert, welches einen globalen einstellbaren Hintergrundstrom empfängt. Ein derartiges Neuronenareal ist in Fig. 3 wiedergegeben.

Fig. 3 zeigt ein Neuronenareal aus künstlichen Neuronen mit Neuronenpools 1, 2, ..., N aus erregenden Neuronen, wobei jeder Pool durch die entsprechende Aktivität in der Form einer über alle Neuronen im Pool gemittelten Spiking-Rate $v_1$, $v_2$, ..., $v_N$ charakterisiert ist. Die Spiking-Rate ist eine hinlänglich aus dem Stand der Technik bekannte Größe. Jeder Pool zeichnet sich dadurch aus, dass er ähnliche Eingaben empfängt und sich alle künstlichen Neuronen des jeweiligen Pools ähnlich verhalten. Die spezifischen Eingaben für jeden der Pools 1 bis N entsprechen Eingabeströmen bzw. Eingabesignalen $I_{s,1}$, $I_{s,2}$, ..., $I_{s,N}$ zu den jeweiligen Pools 1, 2, ..., N. Die Eingabeströme beinhalten dabei die laterale Eingabe von benachbarten Sensorknoten und ggf. ein Sensorsignal (wenn der entsprechende Messwert des Neuronenpools gemessen wird) und sind durch obige Gleichung (1) definiert.

Die lokalen Verbindungen der künstlichen Neuronen in einem Pool werden durch ein starkes lokales synaptisches Gewicht $w_+$ charakterisiert. Demgegenüber weisen die Neuronen zwischen den einzelnen Pools schwächere laterale synaptische Gewichte mit dem Wert w- auf. Neben den Pools aus erregenden Neuronen existiert ferner ein sogenannter Pool aus hemmenden Neuronen INH mit der Spiking-Rate $v_I$. Dieser hemmende Pool INH weist eine lokale Erregung mit dem Wert $-w_{II}$ auf und wird über einen globalen hemmenden Strom $I_I$ gespeist. Ferner ist dieser Pool an die Pools der erregenden Neuronen gekoppelt, um eine globale Hemmung auf diese erregenden Neuronen auszuüben. Die Kopplung erfolgt über entsprechende Gewichte von dem hemmenden Pool zu den erregenden Pools mit dem Wert $-w_{EI}$ und von den erregenden Pools hin zu dem hemmenden Pool mit dem Wert $w_{IE}$. In dem neuronalen Netz werden Eingabeinformationen nur über die erregenden Pools durch die entsprechenden Eingabeströme $I_{S,1}$, $I_{S,2}$, ..., $I_{S,N}$ zugeführt. Den erregenden Pools des Netzes wird ferner ein globaler, veränderbarer Eingabestrom $I_0$ zugeführt.

In der hier beschriebenen Ausführungsform des in einem Sensorknoten verwendeten Neuronenareals wird die Dynamik des Areals über die hinlänglich aus dem Stand der Technik bekannte Mean-Field-Approximation beschrieben. Die Dynamik der Pools wird dabei durch folgende Gleichung approximiert:

$$\tau \frac{d}{dt} v(t) = -v(t) + g\big(I(t)\big) \qquad (4)$$

Hierbei ist v(t) die gemittelte Spiking-Rate über den jeweiligen Pool, g(I) stellt eine sogenannte Transferfunktion des mittleren Eingangsstroms I(t) dar, und $\tau$ bezeichnet eine Zeitkonstante des Areals.

Die Dynamik des neuronalen Netzes, das in der hier beschriebenen Ausführungsform verwendet wird, entspricht der in der Druckschrift [3] beschriebenen Dynamik. Diese wird durch folgende Gleichungen beschrieben:

$$\tau \frac{d}{dt} v_k = -v_k + g\left( I_0 + I_{s,k} + w_+ v_k + \sum_{l \neq k} w_- v_l - w_{EI} v_I \right), \; k = 1, ..., N \qquad (5)$$

$$v_I = g_I \cdot \left( I_I + \sum_k w_{IE} v_k - w_{II} v_I \right) \qquad (6)$$

Hierbei ist $I_0$ der globale Eingabestrom zu den Pools der erregenden Neuronen, $I_I$ ist der globale Eingabestrom zu dem hemmenden Pool, $I_{s,k}$ (k=1,...,N) ist der spezifische Eingabestrom zu dem jeweiligen Pool k, und $g_I$ ist die Steigung einer hemmenden Transferfunktion.

Der globale Eingabestrom $I_0$ ist hierbei wesentlich für die Eigenschaften des neuronalen Areals. Deshalb zeichnet sich die hier beschriebene Ausführungsform der Erfindung dadurch aus, dass dieser globale Eingabestrom zur Veränderung der Eigenschaften des Neuronenareals verstellt werden kann. Insbesondere können hierdurch die Verarbeitungseigenschaft des Netzes bei Ausfall eines Sensorknotens auf einfache Weise derart verändert werden, dass das Verhalten des Areals durch die laterale Eingabe der benachbarten Sensorknoten bestimmt wird.

Die Gleichung (6) kann wie folgt umgeformt werden:

$$v_I = g_I I_I + g_I w_{IE} \sum_l v_l - g_I w_{II} v_I; \quad v_I = \frac{g_I w_{IE}}{1 + g_I w_{II}} \sum_l v_l + \frac{g_I}{1 + g_I w_{II}} I_I \qquad (7)$$

Mit dieser Umformung kann die Dynamik gemäß Gleichung (5) wie folgt geschrieben werden:

$$\tau \frac{d}{dt} v_k = -v_k + g \left( I_0 + I_{s,k} + w_+ v_k + \sum_{l \neq k} w_- v_l - \frac{g_I w_{EI} w_{IE}}{1 + g_I w_{II}} \sum_l v_l - \frac{g_I w_{EI}}{1 + g_I w_{II}} I_I \right), k = 1, \ldots, N$$

$$= -v_k + g \left( \left( I_0 - \frac{W_I}{w_{IE}} I_I \right) + I_{s,k} + (w_+ - w_-) v_k + (w_- - W_I) \sum_l v_l \right), W_I := \frac{g_I w_{EI} w_{IE}}{1 + g_I w_{II}} \qquad (8)$$

Hieraus ergibt sich folgendes Differentialgleichungssystem, welches in der hier beschriebenen Ausführungsform zur Bestimmung der Aktivitäten der Neuronenpools des Neuronenareals gelöst wird:

$$\tau \frac{d}{dt} v_k = -v_k + g \left( I_b + I_{s,k} + W_S v_k + \frac{W_L}{N} \sum_l v_l \right), \quad k = 1, \ldots, N \qquad (9)$$

wobei

$$I_b = I_0 - \frac{W_I}{w_{IE}} I_I$$

der sogenannte globale effektive Hintergrundstrom ist;

$$W_S = w_+ - w_-$$

die überschüssige lokale Erregung ist (meist größer bzw. gleich Null); und

$$W_L = N(w_- - W_I)$$

die effektive laterale Verbindungsstärke ist (die ihr Vorzeichen ändern kann).

Literaturverzeichnis:

[1] M. Szabo, M. Stetter, G. Deco, S. Fusi, P. Del Giudice, M. Mattia: "Learning to Attend: Modeling the Shaping of Selectivity in Infero-temporal Cortex in a Categorization Task", Biological Cybernetics 94(5): 351-365 (2006)

[2] M. Stetter, "Dynamic functional tuning of nonlinear cortical networks", Phys. Rev. E 73(3 Pt 1):031903.

[3] Mongillo, G., Amit, D. J. und Brunel, N. (2003): "Retrospective and prospective persistent activity induced by Hebbian learning in a recurrent cortical network", Eur. J. Neurosci. 18: 2011-2024.

**Patentansprüche**

1. Verfahren zur rechnergestützten Verarbeitung von in einem Sensornetzwerk erfassten Messwerten (T1, T2, ..., TN), wobei das Sensornetzwerk eine Vielzahl von Sensorknoten (S1, S2, S3) umfasst, welche jeweils einen oder mehrere Sensoren zur Detektion der Messwerte (T1, T2, ..., TN) aufweisen, wobei in einem Sensorknoten (S1, S2, S3) die Messwerte (T1, T2, ..., TN) von einer Anzahl von benachbarten Sensorknoten (S1, S2, S3) bekannt sind, bei dem:

   - jedem Sensorknoten (S1, S2, S3) ein Neuronenareal umfassend eine Mehrzahl von durch Aktivitäten ($v_1$, ..., $v_N$) **gekennzeichnet**en Neuronengruppen (1, 2, ..., N) mit einem oder mehreren Neuronen zugewiesen ist, wobei jeder Neuronengruppe (1, 2, ..., N) ein Messwert (T1, T2, ..., TN) und/oder Messwertbereich der im Sensorknoten (S1, S2, S3) messbaren Messwerte zugeordnet ist;
   - Korrelationen zwischen den Messwerten (T1, T2, ..., TN) eines jeweiligen Sensorknotens (S1, S2, S3) zu den Messwerten (T1, T2, ..., TN) der benachbarten Sensorknoten (S1, S2, S3) durch Gewichte ($W_{ij}$) repräsentiert sind, welche mit einem Lernverfahren gelernt sind und jeweils zwischen einer Neuronengruppe (1, 2, ..., N) des jeweiligen Sensorknotens (S1, S2, S3) und einer Neuronengruppe (1, 2, ..., N) eines benachbarten Sensorknotens (S1, S2, S3) liegen;
   - an die Neuronengruppen (1, 2, ..., N) des jeweiligen Sensorknotens (S1, S2, S3) jeweils ein Eingabesignal ($I_{s,1}$, ..., $I_{s,N}$) angelegt wird, wobei das Eingabesignal ($I_{s,1}$, ..., $I_{s,N}$) ein erstes Signal umfasst, welches von den Gewichten ($W_{ij}$) zwischen der jeweiligen Neuronengruppe (1, 2, ..., N) und den Neuronengruppen (1, 2, ..., N) der benachbarten Sensorknoten (S1, S2, S3) sowie von den Aktivitäten ($v_1$, ..., $v_N$) der Neuronengruppen (1, 2, ..., N) der benachbarten Sensorknoten (S1, S2, S3) abhängt, wobei im Falle, dass ein Messwert (T1, T2, ..., TN) in einem jeweiligen Sensorknoten (S1, S2, S3) zu einem Messzeitpunkt messbar ist, der Neuronengruppe (1, 2, ..., N), welcher der gemessene Messwert (T1, T2, ..., TN) oder der entsprechende Messwertbereich zugeordnet ist, ferner ein zweites Signal (I) zugeführt wird;
   - die Aktivität ($v_1$, ..., $v_N$) einer jeweiligen Neuronengruppe in die Zustände aktiv und inaktiv eingeteilt ist und das an eine Neuronengruppe (1, 2, ..., N) angelegte zweite Signal (I) die Neuronengruppe (1, 2, ..., N) in den aktiven Zustand versetzt;
   - über die Aktivitäten ($v_1$, ..., $v_N$) der Neuronengruppen des jeweiligen Sensorknotens (S1, S2, S3) und/oder der benachbarten Sensorknoten (S1, S2, S3) eine Abweichung vom Normalbetrieb des jeweiligen Sensorknotens (S1, S2, S3) und/oder eine Abweichung vom Normalzustand der Umgebung des jeweiligen Sensorknotens (S1, S2, S3) und/oder eine Schätzung des Messwerts (T1, T2, ..., TN) des jeweiligen Sensorknotens (S1, S2, S3) ermittelt wird.

2. Verfahren nach Anspruch 1, bei dem die Gewichte ($W_{ij}$) mit einem Hebb'schen Lernverfahren gelernt werden.

3. Verfahren nach Anspruch 1 oder 2, bei dem die Gewichte während der Durchführung des Verfahrens kontinuierlich gelernt werden.

4. Verfahren nach Anspruch 1 oder 2, bei dem die Gewichte während der Durchführung des Verfahrens konstant gehalten werden.

5. Verfahren nach einem der vorhergehenden Ansprüche, bei dem der Ausfall eines jeweiligen Sensorknotens (S1, S2, S3) als Abweichung vom Normalbetrieb **dadurch** ermittelt wird, dass keine der Neuronengruppen (1, 2, ..., N) des jeweiligen Sensorknotens (S1, S2, S3) aktiv ist.

6. Verfahren nach einem der vorhergehenden Ansprüche, bei welchem dem Neuronenareal eines jeweiligen Sensorknotens (S1, S2, S3) ein einstellbares globales Hintergrundsignal ($I_b$) zugeführt wird.

7. Verfahren nach Anspruch 6, bei dem das globale Hintergrundsignal ($I_b$) während des Betriebs des Sensornetzwerks derart justiert wird, dass genau eine Neuronengruppe (1, 2, ..., N) im aktiven Zustand ist.

8.  Verfahren nach Anspruch 7 in Kombination mit Anspruch 5, bei dem nach der Detektion des Ausfalls eines Sensorknotens (S1, S2, S3) das Hintergrundsignal ($I_b$) gemäß Anspruch 7 justiert wird, wobei die der aktiven Neuronengruppe (1, 2, ..., N) zugeordneten Messwerte (T1, T2, ..., TN) und/oder Messwertbereiche nach der Justierung des Hintergrundsignals ($I_b$) jeweils die Schätzung des Messwerts darstellen.

9.  Verfahren nach Anspruch 7, bei dem zur Schätzung des Messwerts (T1, T2, ..., TN) in einem jeweiligen Sensorknoten (S1, S2, S3) an die Neuronengruppen (1, 2, ..., N) des jeweiligen Sensorknotens (S1, S2, S3) jeweils ausschließlich das erste Signal als Eingabesignal ($I_{s,1}$, ..., $I_{s,N}$) angelegt wird, wobei der Messwert (T1, T2, ..., TN) und/oder Messwertbereich derjenigen Neuronengruppe (1, 2, ..., N), welche aufgrund des Anlegens des ersten Signals aktiv ist, die Schätzung des Messwerts (T1, T2, ..., TN) darstellt.

10. Verfahren nach einem der vorhergehenden Ansprüche, bei dem der Messwert (T1, T2, ..., TN) und/oder Messwertbereich derjenigen Neuronengruppe (1, 2, ..., N), welche das größte erste Signal erhält, die Schätzung des Messwerts (T1, T2, ..., TN) darstellt.

11. Verfahren nach einem der vorhergehenden Ansprüche, bei dem der Schwerpunkt der Verteilung der ersten Signale über die Neuronengruppen (1, 2, ..., N) des jeweiligen Sensorknotens (S1, S2, S3) ermittelt wird, wobei der Messwert (T1, T2, ..., TN) und/oder Messwertbereich der Neuronengruppe (1, 2, ..., N), bei der der Schwerpunkt liegt, die Schätzung des Messwerts (T1, T2, ..., TN) darstellt.

12. Verfahren nach einem der vorhergehenden Ansprüche, bei dem die Verteilung der ersten Signale über die Neuronengruppen (1, 2, ..., N) des jeweiligen Sensorknotens (S1, S2, S3) auf eine Wahrscheinlichkeitsverteilung normiert wird.

13. Verfahren nach Anspruch 12, bei dem durch Stichprobenentnahme mit der Wahrscheinlichkeitsverteilung die Schätzung des Messwerts (T1, T2, ..., TN) ermittelt wird.

14. Verfahren nach Anspruch 12 oder 13, bei dem die Höhe der Wahrscheinlichkeit an der Stelle des tatsächlichen Messwerts des jeweiligen Sensorknotens (S1, S2, S3) als Kriterium für die Abweichung vom Normalzustand der Umgebung des jeweiligen Sensorknotens (S1, S2, S3) dient.

15. Verfahren nach Anspruch 14, wobei der Kehrwert der Höhe der Wahrscheinlichkeit des tatsächlichen Messwerts des jeweiligen Sensorknotens (S1, S2, S3) das Kriterium für die Abweichung vom Normalzustand der Umgebung des jeweiligen Sensorknotens (S1, S2, S3) darstellt.

16. Verfahren nach einem der vorhergehenden Ansprüche, bei dem eine Abweichung vom Normalbetriebszustand des jeweiligen Sensorknotens (S1, S2, S3) dann festgestellt wird, wenn die Schätzung des Messwerts (T1, T2, ..., TN) mehr als ein vorbestimmter Schwellenwert von dem tatsächlich ermittelten Messwert des jeweiligen Sensorknotens (S1, S2, S3) abweicht.

17. Verfahren nach einem der vorhergehenden Ansprüche, bei dem die Sensoren in dem Sensornetzwerk Temperatursensoren und/oder Helligkeitssensoren und/oder Luftfeuchtigkeitssensoren umfassen.

18. Sensornetzwerk, umfassend eine Vielzahl von Sensorknoten (S1, S2, S3), welche jeweils einen oder mehrere Sensoren zur Detektion von Messwerten (T1, T2, ..., TN) aufweisen, wobei in einem Sensorknoten (S1, S2, S3) die Messwerte (T1, T2, ..., TN) von einer Anzahl von benachbarten Sensorknoten (S1, S2, S3) bekannt sind, wobei das Sensornetzwerk derart ausgestaltet ist, dass in dem Sensornetzwerk ein Verfahren nach einem der vorhergehenden Ansprüche durchführbar ist.

19. Computerprogrammprodukt mit einem auf einem maschinenlesbaren Träger gespeicherten Programmcode zur Durchführung eines Verfahrens nach einem der Ansprüche 1 bis 17, wenn das Programm auf einem Rechner, insbesondere in einem Sensorknoten, abläuft.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050251291 A1
- DE 102005045120

**In der Beschreibung aufgeführte Nicht-Patentliteratur**

- **ALBRECHT SCHMIDT.** A Modular Neural Network Architecture with Additional Generalization Abilities for High Dimensional Input Vectors. Manchester Metropolitan University, September 1996, I-x1-113
- Neuronale Netze in der Robotik. *TU-Clausthal,* 19. Januar 2002, 1-20, http://www2.in.tu-clausthal.de/~reuter/ausarbeitung/Elke_von_Lienen_-_Neuronale_Netze_in_der_Robotik.pdf
- **M. SZABO ; M. STETTER ; G. DECO ; S. FUSI ; P. DEL GIUDICE ; M. MATTIA.** Learning to Attend: Modeling the Shaping of Selectivity in Infero-temporal Cortex in a Categorization Task. *Biological Cybernetics,* 2006, vol. 94 (5), 351-365
- **M. STETTER.** Dynamic functional tuning of nonlinear cortical networks. *Phys. Rev.,* vol. E 73 (3 Pt 1), 031903
- **MONGILLO, G. ; AMIT, D. J. ; BRUNEL, N.** Retrospective and prospective persistent activity induced by Hebbian learning in a recurrent cortical network. *Eur. J. Neurosci.,* 2003, vol. 18, 2011-2024